# EUROPEAN PATENT SPECIFICATION

(11) **EP 1 276 963 B1**
(45) Date of publication and mention of the grant of the patent: **15.09.2004**
(21) Application number: 01931650.4
(22) Date of filing: 24.04.2001
(51) Int. Cl.: E21B 43/24

(54) **IN SITU RECOVERY OF HYDROCARBONS FROM A KEROGEN-CONTAINING FORMATION**
IN-SITU-GEWINNUNG VON KOHLENWASSERSTOFFEN AUS EINER KEROGEN ENTHALTENDEN FORMATION
RECUPERATION D'HYDROCARBURES IN SITU DANS UNE FORMATION CONTENANT DU KEROGENE

(30) Priority: 24.04.2000 US 199214 P; 24.04.2000 US 199213 P; 24.04.2000 US 199215 P
(43) Date of publication of application: 22.01.2003
(73) Proprietor: SHELL INTERNATIONALE RESEARCH MAATSCHAPPIJ B.V., 2596 HR Den Haag (NL)
(72) Inventor: BERCHENKO, Ilya, Emil, Friendswood, TX 77546 (US); DE ROUFFIGNAC, Eric, Houston, TX 77005 (US); SHAHIN, Gordon, Thomas, Bellaire, TX 77401 (US); VINEGAR, Harold, J., Houston, TX 77096 (US); WELLINGTON, Scott, Lee, Bellaire, TX 77401 (US); ZHANG, Etuan, Houston, TX 77096 (US)
(86) International application number: PCT/EP2001/004658
(87) International publication number: WO 2001/081720

(56) References cited:
- US-A- 4 397 732
- W. KALKREUTH, C. ROY, M. STELLER: "Conversion characteristics of selected Canadian coals based on hydrogenation and pyrolysis experiments" GEOLOGICAL SURVEY OF CANADA, PAPER 89-8, 1989, pages 108-114, XP001014535

## Description

The present invention relates to a method for the production of hydrocarbons from a kerogen-containing formation.

Hydrocarbon containing materials obtained from subterranean formations are often used as energy resources, as feedstocks, and as consumer products. Concerns over depletion of available hydrocarbon resources have led to development of processes for more efficient recovery, processing and/or use of available hydrocarbon resources. In situ processes can be used to remove hydrocarbon materials from subterranean formations.

Such an in situ process by application of heat to oil shale formations is described in US-A 2923535 and US-A-4886118. Heat is applied to the oil shale formation to pyrolyze kerogen within the oil shale formation. The heat also fractures the formation to increase permeability of the formation. The increased permeability may allow pyrolysis product to travel to a production well where the fluid is removed from the oil shale formation. In the process of US-A-2923535, for example, an oxygen-containing gaseous medium is introduced to a permeable stratum, preferably while still hot from a preheating step, to initiate combustion.

Kerogen is composed of organic matter, which has been transformed due to a maturation process. Hydrocarbon containing formations that include kerogen include, but are not limited to, coal containing formations and oil shale containing formations. The maturation process may include two stages: a biochemical stage and a geochemical stage. The biochemical stage typically involves degradation of organic material by both aerobic and anaerobic mechanisms. The geochemical stage typically involves conversion of organic matter due to temperature changes and significant pressures. During maturation, oil and gas may be produced as organic matter of kerogen is transformed.

For example, kerogen can be classified into four distinct groups: type I, type II, type III, and type IV. The types depend upon precursor materials of the kerogen. The precursor materials transform over time into macerals, which are microscopic structures that have different structures and properties based on the precursor materials from which they are derived. Oil shale may be described as a kerogen type I or type II and may primarily contain macerals from the liptinite group. Liptinites are derived from plants, specifically the lipid rich and resinous parts. The concentration of hydrogen within liptinite may be as high as 9%. In addition, liptinite has a relatively high H/C ratio and a relatively low O/C ratio. A type I kerogen may also be further classified as an alginite, since type I kerogen may consist primarily of alga bodies. Type I kerogen may result from deposits made in lacustrine environments. Type II kerogen may develop from organic matter that was deposited in marine environments.

Type III kerogen may generally include vitrinite macerals. Vitrinite is derived from cell walls and/or woody tissues (e.g., stems, branches, leaves and roots of plants). Type III kerogen may be present in most humic coals. Type III kerogen may develop from organic matter that was deposited in swamps. Type IV kerogen includes the inertinite maceral group. This group is composed of plant material such as leaves, bark and stems that has undergone oxidation during the early peat stages of burial diagenesis. It is chemically similar to vitrinite but has a high carbon and low hydrogen content. Thus, it is considered inert.

As kerogen undergoes maturation, composition of kerogen usually changes. For example, rank stages of coal-containing formations include the following classifications, which are listed in order of increasing rank and maturity for type III kerogen: wood, peat, lignite, sub-bituminous coal, high volatile bituminous coal, medium volatile bituminous coal, low volatile bituminous coal, semi-anthracite, and anthracite. In addition, as rank increases, kerogen tends to exhibit an increase in aromatic nature.

It has been found that it is possible to assess the quality of fluids produced from certain formations by vitrinite reflectance. Properties that may be used to assess the hydrocarbon-containing material include but are not limited to: an amount of hydrocarbon liquids that will tend to be produced from the hydrocarbon-containing material, an API gravity of the produced hydrocarbon liquids, an amount of hydrocarbon gas that will tend to be produced from the hydrocarbon-containing material, and/or an amount of carbon dioxide that will tend to be produced from the hydrocarbon containing material. US-A- 4.397.732 describes the selection of feed coal for processing by direct liquefaction (aboveground) on the basis of vitrinite reflectance.

Accordingly, the present invention provides a method for the in-situ pyrolysis of hydrocarbons in a subterranean kerogen-containing formation, comprising:
providing heat from a heat source to at least a portion of the kerogen-containing formation such that at least a part of the heated portion reaches the pyrolysis temperature of kerogen, yielding pyrolysis products; and
collecting pyrolysis products from the subterranean formation;
wherein the subterranean formation comprises kerogen with a vitrinite reflectance of 0.2 to 3.0%.

"Pyrolysis" is generally defined as the breaking of chemical bonds due to the application of heat in the absence of oxygen. For example, pyrolysis may include transforming a compound into one or more other substances by heat alone, i.e., without oxidation. As used herein "pyrolysis product" refers to a fluid produced during pyrolysis of a kerogen-containing formation.

Vitrinite reflectance (Ro) is the percentage of light reflected from the surface of polished vitrinite. It is a standard measurement used to classify organic source rock. Standards are followed for the preparation of samples. The sample is crushed to a particular size then embedded in a mounting medium, the surface is cut and polished and viewed under a microscope using reflected light. Reflectance is measured, and standards indicate the method to be used, viz., ASTM D2798. It has been found that an increase in vitrinite reflectance of the kerogen-containing material may coincide with a substantial reordering of a structure of the hydrocarbon containing material. Materials with a high vitrinite reflectance may have mirror-like properties and their thermal conductivity may increase. Excellent results have been obtained with kerogen-containing formations with a vitrinite reflectance of at least 0.25%, even better with formations having a vitrinite reflectance of at least 0.4%, most preferably at least 0.5% The upper limit is suitably 3.0%, more preferably 2.0%, most preferably 1.2%.

It is advantageous to select a kerogen-containing formation for treatment based on kerogen with a hydrogen content within the formation. For example, an advantageous kerogen for treatment has a hydrogen content greater than 2 wt%, preferably greater than 3 wt%, or more preferably greater than 4 wt% when measured on a dry, ash-free basis. In addition, the selected section suitably includes kerogen with an elemental hydrogen to carbon ratio that falls within a range from 0.5 to 2, and in many instances from 0.70 to 1.65.

Hydrogen within the formation may neutralise radicals in the generated hydrocarbon fluids. In this manner, hydrogen present in the formation may substantially inhibit reaction of hydrocarbon fragments by transforming the hydrocarbon fragments into relatively short chain hydrocarbon fluids. These hydrocarbon fluids may enter a vapour phase and may be produced from the formation. The increase in the hydrocarbon fluids in the vapour phase may significantly reduce a potential for coking within the selected section of the formation. It is believed that if too little hydrogen is present in the formation, then the amount and quality of the produced fluids will be negatively affected. If too little hydrogen is naturally present, then in some embodiments hydrogen or other reducing fluids may be added to the formation.

When heating a portion of a hydrocarbon containing formation, oxygen within the portion may form carbon dioxide. It may be desirable to reduce the production of carbon dioxide and other oxides. In addition, an amount of carbon dioxide produced from a formation may vary depending on, for example, an oxygen content of a treated portion of the hydrocarbon containing formation. Hence, it is preferable to select and treat a portion of the formation having kerogen with an elemental oxygen weight percentage of less than 20 wt%, preferably 15 wt%, and more preferably 10%. In addition, certain embodiments may include selecting and processing kerogen having an elemental oxygen to carbon ratio of less than 0.15. Alternatively, at least some of the kerogen- containing material in a portion of a formation selected for treatment may have an elemental oxygen to carbon ratio of 0.03 to 0.12. In this manner, production of carbon dioxide and other oxides from an in situ conversion process of hydrocarbon containing material may be reduced.

Electrical heaters may be used to heat the subterranean formation by radiation and/or conduction. An electrical heater may resistively heat an element. Examples of electrical heating elements are described in US-A-2548360, US-A-4716960, US-A-5060287, and US-A-5065818. US-A-6023554 describes an electrical heating element that is positioned within a casing. The heating element generates radiant energy that heats the casing. A granular solid fill material can be placed between the casing and the formation. The casing may conductively heat the fill material, which in turn conductively heats the formation. It may be advantageous to employ uncased well bores for the heat sources.

US-A-4570715 describes an electrical heating element. The heating element has an electrically conductive core, a surrounding layer of insulating material, and a surrounding metallic sheath. The conductive core has a relatively low resistance at high temperatures. The insulating material has electrical resistance, compressive strength and heat conductivity properties that are relatively high at high temperatures. The insulating layer inhibits arcing from the core to the metallic sheath. The metallic sheath has tensile strength and creep resistance properties that are relatively high at high temperatures.

Combustion of a fuel can also be used to heat a formation. In certain instances, combusting a fuel to heat a formation is more economical than using electricity to heat a formation. Several different types of heaters use fuel combustion as a heat source that heats a formation. The combustion can take place in the formation, in a well and/or near the surface. Combustion in the formation can be a fire-flood. An oxidant is then pumped into the formation. The oxidant is ignited to advance a fire front towards a production well. Oxidant pumped into the formation flows through the formation along fracture lines and other high permeability paths in the formation. In such instances the fire front does not flow uniformly through the formation.

A flameless combustor can be used to combust a fuel within a well. US-A-5255742, US-A-5404952, US-A-5862858, and US-A-5899269 describe flameless combustors. Flameless combustion is accomplished by preheating a fuel and combustion air to a temperature above an auto-ignition temperature of the mixture. The fuel and combustion air are suitably mixed in a heating zone to combust.

Heat can also be supplied to a formation from a surface heater. The surface heater produces combustion gases that are circulated through well bores to heat the formation. Alternately, a surface burner is used to heat a heat transfer fluid that is passed through a well bore to heat the formation. Examples of fired heaters, or surface burners that may be used to heat a subterranean formation, are illustrated in US-A-6056057 and US-A-6079499.

The kerogen-containing formation may be oil shale. Preferably the kerogen-containing formation is a coal-containing formation. One important parameter for the feasibility of the present method is the thermal conductivity of the subterranean formation. Prior literature indicated that certain hydrocarbon containing formations, such as coal, exhibited relatively low values for thermal conductivity and thermal diffusivity when heated. For example, in Government report No. 8364 by J.M. Singer and R.P. Tye, entitled "Thermal, Mechanical and Physical Properties of Selected Bituminous Coals and Cokes", US Department of the Interior, Bureau of Mines (1979) the authors report the thermal conductivity and thermal diffusivity for four bituminous coals. The report includes graphs of thermal conductivity and diffusivity that show relatively low values up to about 400 °C (e.g., thermal conductivity is about 0.2W/m °C) or below, and thermal diffusivity is about 1.7 10-3 cm²/s). This government report states that "coals and cokes are excellent thermal insulators". This finding has been confirmed in "The Thermal and Structural Properties of a Hanna Basin Coal", Trans. ASME, Vol. 106, p. 266. June 1984, reporting thermal conductivities for high volatile bituminous coal of about 0.3-0.4 W/m.K, up to 400 °C. These reported values for thermal conductivities of coal containing material tend to discourage the use of in situ heating for coal.

It was found that thermal conductivities of the coals used were higher than reported values for thermal conductivities of coal-containing material. It is believed that the difference may be at least partially accounted for if it is assumed that the reported values do not take the confined nature of the coal in an in situ location into consideration.

Coal is often mined and used as a fuel within an electricity generating power plant. Most coal that is used as a fuel to generate electricity is mined. A significant number of coal containing formations are, however, not suitable for economical mining. For example, mining coal from steeply dipped coal seams, from thin coal seams, and/or from deep coal seams may not be economically feasible.

The kerogen-containing formation or the portion thereof which is subjected to the in situ heat treatment may have a width of for example at least 0.5 m, or at least 1.5 m, or at least 2.4 m, or even at least 3.0 m. The width may be up to 100 m, or up to 1000 m, or even up to 2000 m, or more. The kerogen-containing formation or the portion thereof which is subjected to the in situ heat treatment may have a layer thickness of, for example, at least 1 m, more typically in the range of from 4 m to 100 m, more typically from 6 m to 60 m. The overburden of the kerogen-containing formation may have a thickness of, for example, at least 10 m, more typically in the range of from 20 m to 800 m or to 1000 m or more.

Thin coal seams may include coal layers having a thickness of less than about 10 m. Deep coal seams include coal seams that are at, or extend to, depths of greater than 760 m below surface level. The energy conversion efficiency of burning coal to generate electricity is relatively low, as compared to fuels such as natural gas. Also, burning coal to generate electricity often generates significant amounts of carbon dioxide, oxides of sulphur, and oxides of nitrogen and particulates that are released into the atmosphere.

A heat source may be used to heat the subterranean formation. Suitably the heat sources are applied to the formation via one or more well bores. The pyrolysis products are suitable recovered via a production well. The number of heat sources may vary. Advantageously more than one heat source per production well is applied. Advantageously, the number of heat sources per production well ranges from 1 to 16. For example, in one embodiment, an in situ conversion process for hydrocarbon containing material includes heating at least a portion of a hydrocarbon containing formation with an array of heat sources disposed within the formation. In some embodiments, the array of heat sources is positioned substantially equidistant from a production well. Certain patterns (e.g., triangular arrays) are being used.

The spacing between heat sources may typically be within the range of from 5 m to 20 m, preferably from 8 m to 15 m. Positioning of equidistant heat sources, in a triangular pattern, is preferred, as it tends to provide more uniform heating to the coldest spot of the formation in comparison to other patterns such as hexagons. In addition, a triangular pattern tends to provide faster heating to a predetermined temperature in comparison to other patterns such as hexagons. In addition, the in situ conversion process for hydrocarbon containing material may include heating at least a portion of the formation with heat sources disposed substantially parallel to a lateral boundary of the hydrocarbon containing material. Regardless of the arrangement of or distance between the heat sources, in an embodiment, a ratio of heat sources to production wells disposed within a formation is greater than 8.

Certain embodiments also include allowing heat to transfer from one or more of the heat sources to a selected section of the heated portion. In an embodiment, the selected section is disposed between one or more heat sources. For example, the in situ conversion process can also include allowing heat to transfer from one or more heat sources to a selected section of the formation such that heat from one or more of the heat sources pyrolyzes at least some hydrocarbon containing material within the selected section. In this manner, the in situ conversion process includes heating at least a portion of a kerogen-containing formation above a pyrolysis temperature of hydrocarbon containing material in the formation. Suitably a pyrolysis temperature includes a temperature of at least 250 °C, preferably 270 °C. Advantageously, the temperature is at least 305 °C. Heat may be allowed to transfer from one or more of the heat sources to the selected section substantially by conduction. The pyrolysis temperature can be as high as 900 °C, but preferably does not exceed 400 °C. In a further embodiment, the portion may be heated such that an average temperature of the selected section may be less than 375 °C, such that the pyrolysis is carried out from 270 to 375 °C.

The spacing between heat sources can be selected to increase an area of the selected section. In this manner, spacing between heat sources is selected to increase the effectiveness of the heat sources, thereby increasing the economic viability of a selected in situ conversion process for kerogen-containing material.

The portion of the kerogen-containing formation may be heated at a heating rate in a range from 0.1 °C/day to 50 °C/day. Suitably, the selected portion of the kerogen-containing formation is heated at a heating rate in a range of 0.1 °C/day to 10 °C/day. For example, a majority of hydrocarbons may be produced from a formation at a heating rate within a range of about 0.1 °C/day to about 10 °C/day. Especially in the pyrolysis temperature range, the heating rate is low. Hence, a kerogen-containing formation is advantageously heated at a rate of from 0.1 to 1 °C/day, in particular less than 0.7 °C/day through the pyrolysis temperature range. The pyrolysis temperature range suitably includes a range of temperatures as described above, i.e. from 270-400 °C. Below the pyrolysis temperatures the heating rate is less influential, and can be up to 50 °C/day, preferably from 3 to 10 °C/day. For example, the heated portion may be heated at such a rate for a time greater than 50% of the time needed to span the temperature range, more than 75% of the time needed to span the temperature range, or more than 90% of the time needed to span the temperature range.

The rate at which a kerogen-containing formation is heated can affect the quantity and quality of the pyrolysis products produced from the hydrocarbon containing formation. For example, heating at high heating rates, as is the case when a Fischer Assay is conducted, may produce a larger quantity of fluids from a hydrocarbon containing formation. The products of such a process, however, may be of a significantly lower quality than when heating using heating rates less than about 10 °C/day. Heating at a rate of temperature increase less than approximately 10 °C/day may allow pyrolysis to occur within a pyrolysis temperature range in which production of coke and tars may be reduced. In addition, a rate of temperature increase of less than about 3 °C/day may further increase the quality of the produced fluids by further reducing production of tars within a hydrocarbon containing formation.

In some embodiments, controlling temperature within a kerogen-containing formation involves controlling a heating rate within the formation. For example, controlling heating rate such that the heating rate is less than approximately 3 °C/day provides better control of a temperature within the kerogen-containing formation.

An in situ pyrolysis process according to the present invention can include monitoring a rate of temperature increase at a production well. A temperature within a portion of a kerogen-containing formation, however, can be measured at various locations within the portion of the kerogen-containing formation. For example, a method for treating a portion of a hydrocarbon containing formation includes monitoring a temperature of the portion at a midpoint between two adjacent heat sources. The temperature can be monitored over time. In this manner, a rate of temperature increase may also be monitored. A rate of temperature increase can affect a composition of pyrolysis products produced from the formation. As such, a rate of temperature increase may be monitored, altered and/or controlled, for example, to alter a composition of pyrolysis products produced from the formation. The temperature of the portion can, e.g., be monitored through a test well disposed in the formation. For example, the test well is positioned in a formation between a first heat source and a second heat source. Certain systems and methods include controlling the heat from the first heat source and/or the second heat source to raise the monitored temperature at the test well at a rate of less than about a selected amount per day. In addition or alternatively, a temperature of the portion is monitored at a production well. In this manner, the in situ process according to the present invention includes controlling the heat from the first heat source and/or the second heat source to raise the monitored temperature at the production well at a rate of less than a selected amount per day.

The pressure within a selected section of a heated portion of the kerogen-containing formation may vary depending on, for example, depth, distance from a heat source, a richness of the hydrocarbon containing material within the hydrocarbon containing formation, and/or a distance from a producer well.

It has been found that the product quality of the pyrolysis products can be further improved by maintaining an elevated pressure in the kerogen-containing formation.

The pressure can be controlled during pyrolysis and during the production of the pyrolysis products from the formation. Although the pressure can be atmospheric, suitably, a pressure of at least 1.4 bar (0.14 MPa), preferably 1.5 bar (0.15 MPa) is applied, more typically at least 1.6 bar, in particular at least 1.8 bar. In particular, when the pyrolysis temperature is at least 300 °C, a pressure of at least 1.6 bar is suitably applied. The upper limit of the pressure may be determined by the structure and the weight of the overburden. Frequently, under practical conditions, the pressure is less than 70 bar, more frequently less than 60 bar or even less than 50 bar. The pressure may advantageously be controlled within a range of from 2 bar to 18 bar or 20 bar, or alternatively within a range of from 20 bar to 36 bar.

In coal formations, the pressure is suitably controlled within a range of 1.4 bar absolute to 36 bar absolute (0.14 - 3.6 MPa). Preferably, the pressure is at least 1.5 bar (0.15 MPa). For example, the process may include controlling a pressure within a majority of a selected section of a heated portion of the formation. The controlled pressure is preferably above 2 bar absolute (0.2 MPa) during pyrolysis. An in situ conversion process for kerogen-containing formation includes preferably raising and maintaining the pressure in the formation within a range to 20 bars absolute (2 MPa). Control of the pressure in the formation can occur at the production well or at the heat sources. Pressure within a formation can be determined at a number of different locations, which may include but may not be limited to, at a well head and at varying depths within a well bore. In some embodiments pressure is measured at a producer well. In alternate embodiments pressure may be measured at a heater well. Also, test wells can be employed, similar to the test wells described above for temperature measurements.

A valve may be configured to maintain, alter, and/or control a pressure within a heated portion of a hydrocarbon containing formation. For example, a heat source disposed within a hydrocarbon containing formation may be coupled to a valve. The valve may be configured to release fluid from the formation through the heater source. In addition, a pressure valve may be coupled to a production well, which may be disposed within the hydrocarbon containing formation. In some embodiments, fluids released by the valves may be collected and transported to a surface unit for further processing and/or treatment.

The pyrolysis products include molecular hydrogen. It has surprisingly been found that controlling formation conditions to control the pressure of hydrogen in the produced fluid results in improved qualities of the produced fluids. Therefore, it is advantageous to control formation conditions such that the partial pressure of hydrogen in the pyrolysis products product is greater than about 0.5 bar absolute (0.5 MPa), as measured at a production well.

It is possible to provide a reducing agent to at least a portion of the formation. A reducing agent provided to a portion of the formation during heating may increase production of selected pyrolysis products. A reducing agent may include, but is not limited to, molecular hydrogen. Pyrolysis of the kerogen-containing formation is believed to result in hydrocarbon fragments. Such hydrocarbon fragments may react with each other and other compounds present in the formation. Reaction of these hydrocarbon fragments can increase production of olefinic and aromatic compounds. A reducing agent provided to the formation may react with these hydrocarbon fragments to form selected products and/or inhibit the production of non-selected products such as olefins and aromatics. Molecular hydrogen is generated in the pyrolysis reaction. It is also possible to add hydrogen. Such hydrogen may be generated by reaction of hot carbon with steam. Molecular hydrogen may also be generated by cracking an injected hydrocarbon fluid. The reducing agent can also be provided from at least part of the pyrolysis product produced in a first portion of a hydrocarbon-containing formation to a second portion of the formation. For example, molecular hydrogen generated in a first portion of the formation is provided to a second portion of the formation.

In another embodiment, a pressure within a heated portion of the formation is sufficient to increase vapour phase transport of the pyrolysis products within the formation. The increased vapour phase transport will be due, in part, to generation of hydrogen within a portion of the hydrocarbon containing formation. It is believed that the generated components may include a double bond and/or a radical. H₂ in the pyrolysis products may reduce the double bond of the generated pyrolysis products, thereby reducing a potential for polymerisation of the generated pyrolysis products. In addition, hydrogen may also neutralize radicals in the generated pyrolysis products. Therefore, hydrogen is believed to substantially inhibit the generated pyrolysis products from reacting with each other and/or with other compounds in the formation. In this manner, relatively short chain fluids may enter the vapour phase and may be produced from the formation.

Increasing an amount of pyrolysis products in the vapour phase significantly reduces the potential for coking within the selected section of the formation. Also vapour phase transport increases the hydrocarbon recovery efficiency. A coking reaction may occur in the liquid phase. Since many of the generated components are transformed into short chain hydrocarbons and may enter the vapour phase, coking tendency within the selected section is decreased. Since coking may also reduce a permeability of a formation, increasing an amount of pyrolysis fluids in the vapour phase also increases the permeability of the formation.

The mass of at least a portion of the formation will be reduced due to the production of pyrolysis products from the formation. As such, a permeability and porosity of at least a portion of the formation will increase. In addition, removing water during the heating may also increase the permeability and porosity of at least a portion of the formation.

In certain embodiments the permeability of at least a portion of a kerogen-containing formation will increase to greater than 0.01 or 0.1, or even 1 Darcy. In certain embodiments a substantially uniform increase of the permeability of at least a portion of the kerogen-containing formation is obtained. Also the porosity of at least a portion of the kerogen-containing formation can be substantially uniformly increased.

Heating of a kerogen-containing formation to a pyrolysis temperature range can occur before substantial permeability has been generated within the hydrocarbon containing formation. An initial lack of permeability may prevent the transport of generated fluids from a pyrolysis zone within the formation. In this manner, as heat is initially transferred from a heat source to the kerogen-containing formation, a fluid pressure within the kerogen-containing formation may increase proximate to a heat source. Such an increase in fluid pressure may be caused by, for example, generation of fluids during pyrolysis of at least some hydrocarbon containing material in the formation. The increased fluid pressure may be released, monitored, altered, and/or controlled through such a heat source. For example, the heat source may include a valve as described in above embodiments. Such a valve may be configured to control a flow rate of fluids out of and into the heat source. In addition, heat source may include an open hole configuration through which pressure may be released.

Alternatively, pressure generated by expansion of pyrolysis fluids or other fluids generated in the formation may be allowed to increase although an open path to the production well or any other pressure sink may not yet exist in the formation. In addition, a fluid pressure may be allowed to increase to a lithostatic pressure. Fractures in the hydrocarbon containing formation may form when the fluid pressure equals or exceeds the lithostatic pressure. For example, fractures may form from a heat source to a production well. The generation of fractures within the heated portion may reduce pressure within the portion due to the production of pyrolysis products through a production well. To maintain a selected pressure within the heated portion, a back pressure may be maintained at the production well.

Fluid pressure within a hydrocarbon containing formation may vary depending upon, for example, thermal expansion of hydrocarbon containing material, generation of pyrolysis fluids, and withdrawal of generated fluids from the formation. For example, as fluids are generated within the formation a fluid pressure within the pores may increase. Removal of generated fluids from the formation may decrease a fluid pressure within the formation.

The process according to the invention allows for altering and/or controlling production of olefins. For example, the process may include heating the portion at a temperature rate to produce pyrolysis products having an olefin content of less than about 10 % by weight of a condensable component of the pyrolysis products. The reduction of olefin production reduces substantially the tendency for coating of a pipe surface by such olefins, thereby reducing difficulty associated with producing hydrocarbons through such piping. Reducing olefin production also tends to inhibit polymerisation of hydrocarbons during pyrolysis, thereby enhancing the quality of produced fluids (e.g., by lowering the carbon number distribution, increasing API gravity, etc.).

In some embodiments, however, the portion may be heated at a temperature rate to selectively increase the olefin content of a condensable component of the hydrocarbon fluids. For example, olefins may be separated from such a condensable component and may be used to produce additional products.

In certain embodiments, after pyrolysis of a portion of the formation, synthesis gas may be produced from hydrocarbon containing material remaining within the formation. Pyrolysis of the portion may produce a relatively high, substantially uniform permeability throughout the portion. Such a relatively high, substantially uniform permeability may allow generation of synthesis gas without production of significant amounts of hydrocarbon fluids in the synthesis gas. The portion may also have a large surface area and/or surface area/volume. The large surface area may allow synthesis gas producing reactions to be substantially at equilibrium conditions during synthesis gas generation. The relatively high, substantially uniform permeability may result in a relatively high recovery efficiency of synthesis gas, as compared to synthesis gas generation in a hydrocarbon containing formation that has not been so treated.

Synthesis gas may be produced from the formation prior to or subsequent to producing a pyrolysis product from the formation. Synthesis gas is generally defined as a mixture of hydrogen and carbon monoxide. Additional components of synthesis gas may include water, carbon dioxide, methane and other gases. For example, synthesis gas generation may be commenced before and/or after pyrolysis product production decreases to an uneconomical level. In this manner, heat provided to pyrolyze may also be used to generate synthesis gas. For example, if a portion of the formation is at a temperature of 270 °C to 375 °C after pyrolysis, then less additional heat is generally required to heat such portion to a temperature sufficient to support synthesis gas generation.

Pyrolysis of at least some hydrocarbon containing material can in some embodiments convert about 20 %wt or more of carbon initially available. Synthesis gas generation may convert at least an additional 10 %w and typically up to an additional 70 %wt of carbon initially available. In this manner, in situ production of synthesis gas from a hydrocarbon containing formation may allow conversion of larger amounts of carbon initially available.

The synthesis gas may be generated in a wide temperature range, such as between 400 °C and 1200 °C, more typically between 600 °C and 1000 °C. At a relatively low synthesis gas generation temperature a synthesis gas tends to be produced which has a high H₂ to CO ratio. A relatively high formation temperature may produce a synthesis gas having a H₂ to CO ratio that approaches 1, and the stream may include mostly, and in some cases substantially only, H₂ and CO. At a formation temperature of about 700 °C, the formation may produce a synthesis gas having a H₂ to CO ratio of 2. Typically synthesis gas may be generated which has a H₂ to CO mole ratio in the range of from 1:4 to 8:1, more typically in the range of from 1:2 to 4:1, in particular in the range of from 1:1 to 2.5:1. Certain embodiments may include blending a first synthesis gas with a second synthesis gas to produce synthesis gas of a desired composition. The first and the second synthesis gases may be produced from different portions of the formation.

Heat sources for synthesis gas production may include any of the heat sources as described in any of the embodiments set forth herein. Alternatively, heating may include transferring heat from heat transfer fluid (e.g., steam or combustion products from a burner) flowing within a plurality of well bores within the formation.

A synthesis gas generating fluid (e.g., liquid water, steam, carbon dioxide, and mixtures thereof or mixtures with air, oxygen and hydrocarbons) may be provided to the formation. For example, the synthesis gas generating fluid mixture may include steam and oxygen. In an embodiment, a synthesis gas generating fluid may include aqueous fluid produced by pyrolysis of at least some hydrocarbon containing material within one or more other portions of the formation. Providing the synthesis gas generating fluid may alternatively include raising a water table of the formation to allow water to flow into it. Synthesis gas generating fluid may also be provided through at least one injection well bore. The synthesis gas generating fluid will generally react with carbon in the formation to form H₂, water, CO₂, and/or CO. A portion of the carbon dioxide may react with carbon in the formation to generate carbon monoxide. Hydrocarbons such as ethane may be added to a synthesis gas generating fluid. When introduced into the formation, the hydrocarbons may crack to form hydrogen and/or methane. The presence of methane in produced synthesis gas may increase the heating value of the produced synthesis gas.

Synthesis gas generating reactions are typically endothermic reactions. In an embodiment, an oxidant may be added to a synthesis gas generating fluid. The oxidant may include, but is not limited to, air, oxygen enriched air, oxygen, hydrogen peroxide, other oxidising fluids, or combinations thereof. The oxidant may react with carbon within the formation to exothermically generate heat. Reaction of an oxidant with carbon in the formation may result in production of CO₂ and/or CO. Introduction of an oxidant to react with carbon in the formation may economically allow raising the formation temperature high enough to result in generation of significant quantities of H₂ and CO from carbon within the formation.

Synthesis gas generation may be via a batch process or a continuous process, as is further described herein. Synthesis gas may be produced from one or more producer wells that include one or more heat sources. Such heat sources may operate to promote production of the synthesis gas with a desired composition.

Certain embodiments may include monitoring a composition of the produced synthesis gas, and then controlling heating and/or controlling input of the synthesis gas generating fluid to maintain the composition of the produced synthesis gas within a desired range. For example, a desired composition of the produced synthesis gas may have a ratio of hydrogen to carbon monoxide of about 2:1.

Certain embodiments may include blending a first synthesis gas with a second synthesis gas to produce synthesis gas of a desired composition. The first and the second synthesis gases may be produced from different portions of the formation.

Synthesis gases described herein may be converted to heavier condensable hydrocarbons. For example, a Fischer-Tropsch hydrocarbon synthesis process may be configured to convert synthesis gas to branched and non-branched hydrocarbons, in particular to paraffins. Paraffins produced from the Fischer-Tropsch process may be configured to produce other products such as diesel, jet fuel, and naphtha products. The produced synthesis gas may also be used in a catalytic methanation process to produce methane. Alternatively, the produced synthesis gas may be used for production of methanol, gasoline and diesel fuel, ammonia, and middle distillates. Produced synthesis gas may be used to heat the formation as a combustion fuel. Hydrogen in produced synthesis gas may be used to upgrade oil.

Synthesis gas may also be used for other purposes. Synthesis gas may be combusted as fuel. Synthesis gas may also be used for synthesising a wide range of organic and/or inorganic compounds such as hydrocarbons and ammonia. Synthesis gas may be used to generate electricity, either by reducing the pressure of the synthesis gas in turbines, and/or using the temperature of the synthesis gas to make steam (and then run turbines). Synthesis gas may also be used in an energy generation unit such as a molten carbonate fuel cell, a solid oxide fuel cell, or other type of fuel cell.

In an embodiment, a portion of a formation that has been pyrolysed and/or subjected to synthesis gas generation may be allowed to cool or may be cooled to form a cooled, spent portion within the formation. For example, a heated portion of a formation may be allowed to cool by transference of heat to adjacent portion of the formation. The transference of heat may occur naturally or may be forced by the introduction of heat transfer fluids through the heated portion and into a cooler portion of the formation. Alternatively, introducing water to the first portion of the formation may cool the first portion. Water introduced into the first portion may be removed from the formation as steam. The removed water may be injected into a hot portion of the formation to create synthesis gas.

Further advantages of the present invention may become apparent to those skilled in the art with the benefit of the following detailed description of the preferred embodiments and upon reference to the accompanying drawings in which:
Fig. 1 shows a cross-sectional view of an in situ experimental field test system;
Fig. 2 illustrates the location of heat sources, production wells, and temperature observation wells used in the experimental field test system;
Fig. 3 illustrates a plot of cumulative volume of liquid hydrocarbons produced as a function of time (m³/day); and
Fig. 4 illustrates a plot of cumulative volume of gas produced in standard cubic feet, produced as a function of time (in days) for the same in situ experiment.

### Example 1

A series of experiments was conducted to determine the effects of vitrinite reflectance on properties of fluids produced from such kerogen-containing formations. The series of experiments included Fischer Assay and Rock-Eval pyrolysis. The series of experiments were conducted on cubes of coals to determine source rock properties of each coal and to assess potential oil and gas production from each coal.

Rock-Eval pyrolysis is a petroleum exploration tool developed to assess the generative potential and thermal maturity of prospective source rocks. A ground sample may be pyrolysed in a helium atmosphere. The sample is initially heated and held at a temperature of 300 °C for 5 minutes, releasing hydrocarbons. The sample is further heated at a rate of 25 °C/min to a final temperature of 600 °C, generating further hydrocarbons. Any CO₂ generated is measured by thermal conductivity detection. The results are presented as percentage of oil based on the sample on a dry and ash-free basis.

Seven coals of different ranks were treated in a laboratory to simulate an in situ conversion process. The different coal samples were heated relatively fast to 250 °C, and subsequently at a rate of about 2 °C/day to 600 °C and at a pressure ("p") indicated in Table I. The products were cooled and the condensed phase was collected as oil.

**Table I**

| Coal | 1 | 2 | 3 | 4 | 5 | 6 | 7 | 8 | 9 |
|---|---|---|---|---|---|---|---|---|---|
| VR | 0.29 | 0.40 | 0.44 | 0.51 | 0.59 | 0.75 | 1.28 | 3.1 | 5.7 |
| p,MPa | 0.45 | 0.1 | 0.45 | 0.1 | 0.1 | 0.45 | 0.45 | - | - |
| FA | 6.14 | 14.54 | 12.27 | 16.95 | 18.25 | 26.87 | 11.84 | 0.43 | 0.33 |
| RE | 2.50 | 5.99 | 5.00 | 6.67 | 9.28 | 10.53 | 4.79 | - | - |
| ICP | 2.42 | 9.58 | 9.02 | 10.89 | 15.26 | 23.14 | 9.09 | | |
| P/A | 0.14 | 0.30 | 0.34 | 0.45 | 0.56 | 0.84 | 0.55 | - | - |
| C/A | 0.14 | 0.45 | 0.23 | 0.21 | 0.22 | 0.59 | 0.63 | - | - |
| API, ° | 23 | 28 | 30 | 34 | 34 | 36 | 33 | - | - |
| VR is vitrinite reflectance in %; | | | | | | | | | |
| FA is Fischer Assay, the oil yield based on a dry and ash-free basis, expressed in gal/ton (4.2 10-3 l/kg); RE is Rock-Eval pyrolysis test, %wt of oil based on the dry and ash-free sample; | | | | | | | | | |
| ICP is the oil yield obtained in the laboratory experiments to simulate an in situ conversion process, expressed in gal/ton, based on a dry and ash-free basis; | | | | | | | | | |
| P/A is the ratio paraffins over aromatics in the oil; | | | | | | | | | |
| C/A is the ratio of cyclic alkanes over aromatics in the oil; and | | | | | | | | | |
| API is the API gravity in °. | | | | | | | | | |

The results clearly show that the vitrinite reflectance has an influence on the oil yield and the properties of the hydrocarbons produced. The more advantageous range appears to be from 0.4-1.2%, the optimal appears to be around a vitrinite reflectance of 0.7-0.9%.

### Example 2

A cube of Fruitland high volatile B bituminous coal having a vitrinite reflectance of 0.71%, was heated at about 2 °C/day. Table II shows yield fractions of products generated by heating this cube at 2 °C/day to about 450 °C. In addition, Table II shows yield fractions of products generated by a fluidized bed gasification process of two different blocks of a similar type of coal. The two different blocks of coal include Utah high volatile bituminous and Illinois No. 6 high volatile Bituminous. The yield data for the fluidized bed gasification process was obtained by Jacobs, Jones and Eddinger, as presented in, "Hydrogenation of COED Process Coal-Derived Oil", Industrial and Engineering Chemistry, Process Design and Development. Vol. 10, No. 4, pp. 558-562, 1971. The yield fractions are defined as: naphtha (initial boiling point to 166 °C), jet fuel (166 °C to 249 °C), diesel (249 °C to 370 °C), and bottoms (boiling point greater than 370 °C).

**Table II**

| | Coal cube | Fluidized Bed-Utah | Fluidized Bed-Ill. |
|---|---|---|---|
| Char. | 74.7 | 56.7 | 57.1 |
| CO₂ | 2.6 | 4.6 | 2.5 |
| Gas | 9.7 | 10.5 | 10.7 |
| Water | 6.8 | 4.6 | 6.1 |
| Naphtha | 1.6 | 0.0 | 0.2 |
| Jet | 2.0 | 1.0 | 2.4 |
| Diesel | 2.2 | 6.2 | 5.0 |
| Bottoms | 0.4 | 16.4 | 15.0 |

The fluidized bed processes for which yield fractions are displayed in Table I are indicative of yield fractions which may be obtained from a process involving rapid heating and pyrolysis at an elevated temperature. A rapid heating rate may include greater than approximately 20 °C/day. An elevated temperature for pyrolysis may be 450 °C. In contrast, yield fractions obtained from heating the coal cube are indicative of a process involving slow heating and lower temperature pyrolysis. The API gravity of the total oil produced from the coal cube was about 37°. In contrast, the API gravity of the total oil produced from the fluidized bed-Utah coal was about -3.5°, and the API gravity of the total oil produced from the fluidized bed Illinois coal was about -13.1°. In this manner, slowly heating the coal cube produced a better product having a higher API gravity than product produced from coal that was rapidly heated.

The experiment was repeated in a drum with his coal. It appeared that production of condensable hydrocarbons is substantially complete when the temperature reaches about 390 °C. Methane starts to be produced from 270 °C. Between 270 and 400 °C condensable hydrocarbons, methane and hydrogen were produced. At temperatures above 400 °C methane and hydrogen continued to be produced. Above about 450°C methane concentration decreased.

### Example 3

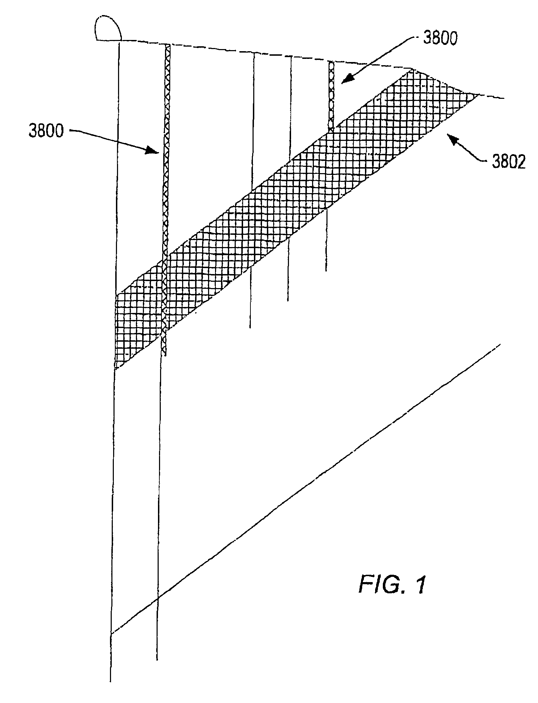

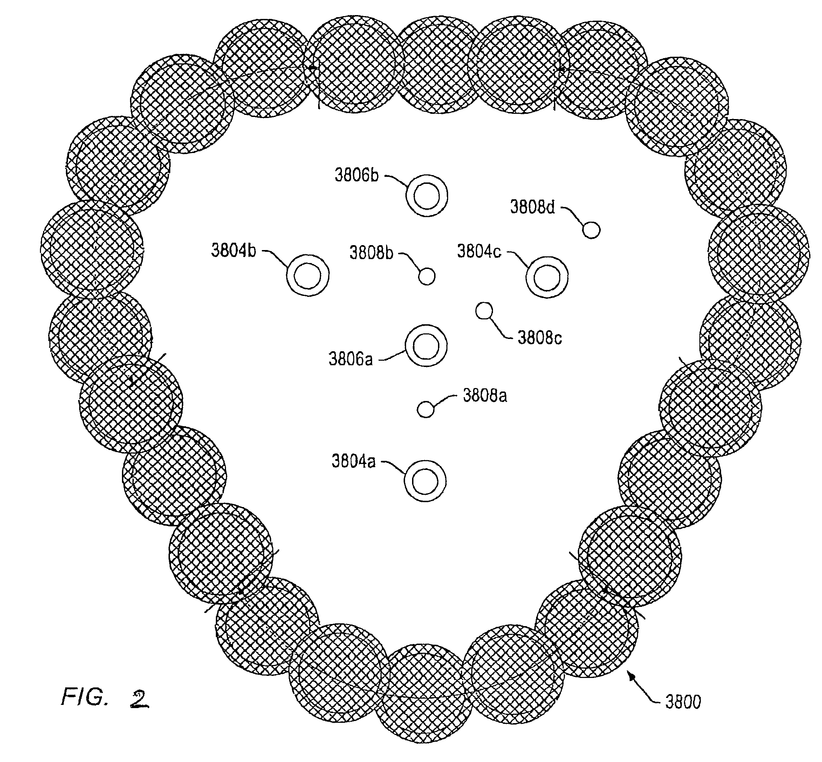

Hydrocarbon fluids were produced from a portion of a coal-containing formation by an in situ experiment conducted in a portion of a coal containing formation. The coal is high volatile bituminous C coal with a vitrinite reflectance of 0.54%. It was heated with electrical heaters. FIG. 1 illustrates a cross-sectional view of the in situ experimental field test system. As shown in FIG. 1, the experimental field test system included at least coal containing formation 3802 within the ground and grout wall 3800. Coal containing formation 3802 dipped at an angle of approximately 36° with an intercepted thickness of approximately 4.9 meters. FIG. 2 illustrates a location of heat sources 3804a, 3804b, 3804c, production wells 3806a, 3806b, and temperature observation wells 3803a, 3808b, 3808c, 3808d used for within the experimental field test system. The three heat sources were disposed in a triangular configuration. Production well 3806a was located proximate a center of the heat source pattern and equidistant from each of the heat sources. A second production well 3806b was located outside the heat source pattern and spaced equidistant from the two closest heat sources. Grout wall 3800 was formed around the heat source pattern and the production wells. The grout wall included pillars 1-24. Grout wall 3800 was configured to inhibit an influx of water into the portion during the in situ experiment. In addition, grout wall 3800 was configured to substantially inhibit loss of generated hydrocarbon fluids to an unheated portion of the formation.

Temperatures were measured at various times during the experiment at each of four temperature observation wells 3808a, 3808b, 3808c, 3808d located within and outside of the heat source pattern as illustrated in FIG. 2. Temperatures at observation wells 3808a, 3808b, and 3808c were relatively close to each other. A temperature at temperature observation well 3808d was significantly colder. This temperature observation well was located outside of the heater well triangle illustrated in FIG. 2. This data demonstrates that in zones where there was little superposition of heat temperatures were significantly lower. Temperature profiles were relatively uniform at the heat sources.

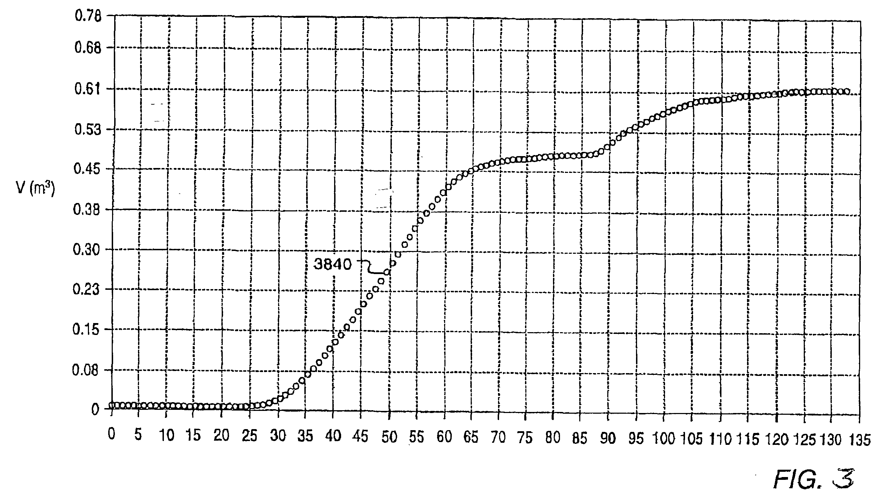

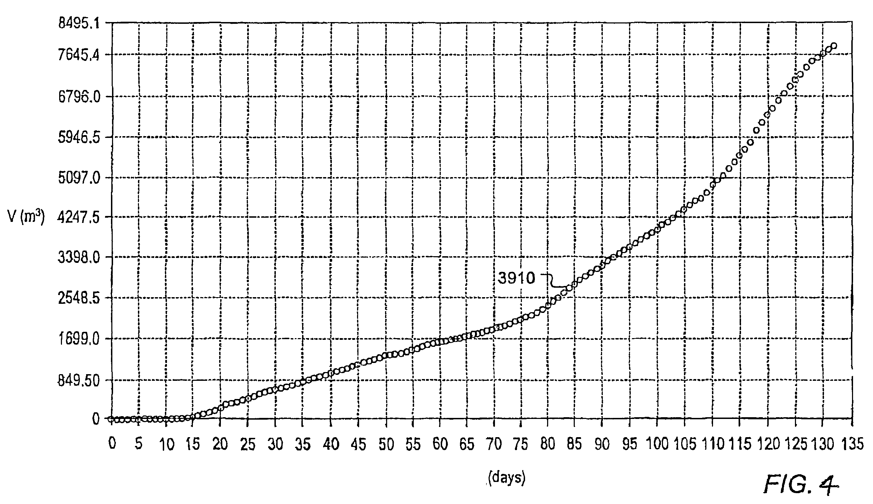

FIG. 3 illustrates a plot of cumulative volume of liquid hydrocarbons produced 3840 as a function of time (m³/day). FIG. 4 illustrates a plot of cumulative volume of gas produced 3910 in cubic meter, produced as a function of time (in days) for the same in situ experiment. Both FIG. 3 and FIG. 4 show the results during the pyrolysis stage only of the in situ experiment. Relatively high quality products were produced during treatment.

Two laboratory experiments on coal cubes from the field experiment site were conducted. One experiment was conducted at 1 bar absolute (0.1 MPa). The second pressure was 8 bar (0.8 MPa). The laboratory carbon number distribution is similar to that produced in the field experiment also at 1 bar absolute. As pressure increases, a range of carbon numbers of the hydrocarbon fluids decreases. An increase in products having carbon numbers less than 20 was observed when operating at 8 bars absolute. Increasing the pressure from 1 bar absolute to 8 bars absolute also increased an API gravity of the condensed hydrocarbon fluids. The API gravities of condensed hydrocarbon fluids produced were approximately 23.1° and approximately 31.3°, respectively. Such an increase in API gravity represents an increased production of more valuable products.

### Example 4

Table III illustrates fractions from a boiling point separation of oils generated by a Fischer Assay and a boiling point separation of oils from the coal cube experiment described above. The field experiment was an in situ conversion process (ICP) that was conducted at a much slower heating rate to a lower final temperature than the Fischer Assay. Table III shows the weight percent of various boiling point cuts of oil produced from a Fruitland high volatile bituminous B coal (vitrinite reflectance 0.71%). Different boiling point cuts may represent different hydrocarbon fluid compositions. The boiling point cuts illustrated include naphtha (initial boiling point to 166 °C), jet fuel (166 °C to 249 °C), diesel (249 °C to 370 °C), and bottoms (boiling point greater than 370 °C). The ICP liquid was a substantially more valuable product. The API gravity of the ICP liquid was significantly greater than the API gravity of the Fischer Assay liquid. The ICP liquid also included significantly less bottoms that the Fischer Assay liquid.

**Table III**

| | ICP | Fischer Assay |
|---|---|---|
| Naphtha | 25.7 | 8.4 |
| Jet fuel | 32.5 | 17.2 |
| Diesel | 34.9 | 35.4 |
| Bottoms | 6.8 | 39.0 |
| API gravity, ° | 37 | 17 |

It was further found that decreasing the heating rate of the portion decreases production of olefins.

### Example 5

An experiment was conducted on the formation treated according to the in situ conversion process to measure the uniform permeability of the formation after pyrolysis. After heating a portion of the coal containing formation, a ten minute pulse of CO₂ was injected into the formation at first production well 3806a and produced at well 3804a, as shown in FIG. 2. The CO₂ tracer test was repeated from production well 3806a to well 3804b and from production well 3806a to well 3804c. As described above, each of the three different heat sources were located equidistant from the production well. The CO₂ was injected at a rate of 4.08 m³/hr. The CO₂ reached each of the three different heat sources at approximately the same time. The yield of CO₂ from each of the three different wells was also approximately equal over time. Such approximately equivalent transfer of a tracer pulse of CO₂ through the formation and yield of CO₂ from the formation indicated that the formation was substantially uniformly permeable. Steady state gas permeability measurements were made between various wells inside the triangle of heater wells. The post treatment permeabilities ranged from 4.5 darcy to 39 darcy, with an average of about 20 darcy. The initial permeabilities had averaged at about 50 millidarcy. The fact that the first CO₂ arrival only occurred approximately 18 minutes after start of the CO₂ pulse indicates that preferential paths had not been created between well 3806a and 3804a, 3804b, and 3804c.

## Claims

1. A method for the in-situ pyrolysis of hydrocarbons in a subterranean kerogen-containing formation, comprising:
providing heat to at least a portion of the kerogen-containing formation such that at least a part of the heated portion reaches the pyrolysis temperature of kerogen, yielding pyrolysis products; and
collecting pyrolysis products from the subterranean formation;
**characterised in that** the subterranean formation is selected to comprise kerogen with a vitrinite reflectance of 0.2 to 3.0%.

2. Method according to claim 1, in which the kerogen-containing formation is a coal-containing formation.

3. Method according to claim 1 or 2, in which the pressure is suitably controlled within a range of 1.4-36, preferably 2-20 bars absolute.

4. Method according to any one of claims 1 to 3, in which the pyrolysis temperature ranges from 270-400 °C, preferably from 275-375 °C.

5. Method according to any one of claims 1 to 4, in which the kerogen-containing formation is heated by one or more heat sources and the pyrolysis products are collected via one or more production wells.

6. Method according to claim 5, in which the number of heat sources ranges from 1 to 16, preferably from 8 to 16, per production well.

7. Method according to any one of claims 1 to 6, in which the kerogen has a vitrinite reflectance from 0.25 to 2.0%, preferably from 0.4 to 1.2%.

8. Method according to any one of claims 1 to 7, in which the kerogen has a hydrogen content greater than 2 wt%, preferably greater than 3 wt%,

9. Method according to any one of claims 1 to 8, in which the kerogen includes an elemental hydrogen to carbon ratio ranging from 0.5 to 2, preferably from 0.70 to 1.65.

10. Method according to any one of claims 1 to 9, in which the kerogen has an elemental oxygen weight percentage of less than 20 wt%, preferably less than 15 wt%.

11. Method according to any one of claims 1 to 10, in which the kerogen has an elemental oxygen to carbon ratio of 0.03 to 0.12.

12. Method according to any one of claims 1 to 11, in which after pyrolysis products have been collected the kerogen-containing formation is allowed to react with a synthesis gas generating fluid.

## Patentansprüche

1. Verfahren zur in-situ-Pyrolyse von Kohlenwasserstoffen in einer unterirdischen kerogenhältigen Formation, umfassend:
Zuführen von Wärme zu wenigstens einem Abschnitt der kerogenhältigen Formation in solcher Weise, daß wenigstens ein Teil des erhitzten Abschnittes die Pyrolysetemperatur von Kerogen erreicht, unter Ausbildung von Pyrolyseprodukten; und
Gewinnen von Pyrolyseprodukten aus der unterirdischen Formation;
**dadurch gekennzeichnet, daß** die unterirdische Formation so ausgewählt wird, daß sie Kerogen mit einer Vitrinitreflexion von 0,2 bis 3,0% umfaßt.

2. Verfahren nach Anspruch 1, worin die kerogenhältige Formation eine kohlehältige Formation ist.

3. Verfahren nach Anspruch 1 oder 2, worin der Druck zweckmäßig innerhalb eines Bereiches von 1,4 bis 36, vorzugsweise 2 bis 20 bar absolut geregelt wird.

4. Verfahren nach einem der Ansprüche 1 bis 3, worin die Pyrolysetemperatur von 270 bis 400°C, vorzugsweise von 275 bis 375°C beträgt.

5. Verfahren nach einem der Ansprüche 1 bis 4, worin die kerogenhältige Formation durch eine oder durch mehrere Heizquellen erhitzt wird und die Pyrolyseprodukte über eine oder mehrere Produktionsbohrungen gewonnen werden.

6. Verfahren nach Anspruch 5, worin die Anzahl der Heizquellen von 1 bis 16, vorzugsweise von 8 bis 16 pro Produktionsbohrung beträgt.

7. Verfahren nach einem der Ansprüche 1 bis 6, worin das Kerogen eine Vitrinitreflexion von 0,25 bis 2,0%, vorzugsweise von 0,4 bis 1,2% aufweist.

8. Verfahren nach einem der Ansprüche 1 bis 7, worin das Kerogen einen Wasserstoffgehalt von über 2 Gew.-%, vorzugsweise von über 3 Gew.-% aufweist.

9. Verfahren nach einem der Ansprüche 1 bis 8, worin das Kerogen ein Verhältnis von elementarem Wasserstoff zu Kohlenstoff im Bereich von 0,5 bis 2, vorzugsweise von 0,70 bis 1,65 aufweist.

10. Verfahren nach einem der Ansprüche 1 bis 9, worin das Kerogen einen Gewichtsprozentsatz an elementarem Sauerstoff von weniger als 20 Gew.-%, vorzugsweise weniger als 15 Gew.-% aufweist.

11. Verfahren nach einem der Ansprüche 1 bis 10, worin das Kerogen ein Verhältnis von elementarem Sauerstoff zu Kohlenstoff von 0,03 bis 0,12 aufweist.

12. Verfahren nach einem der Ansprüche 1 bis 11, worin nach dem Gewinnen der Pyrolyseprodukte die kerogenhältige Formation mit einem Synthesegas generierenden Fluid reagieren gelassen wird.

## Revendications

1. Procédé pour la pyrolyse in situ d'hydrocarbures dans une formation souterraine contenant du kérogène, comprenant :
l'apport de chaleur à au moins une fraction de la formation contenant du kérogène de telle sorte qu'au moins une partie de la fraction chauffée atteigne la température de pyrolyse du kérogène, en donnant des produits de pyrolyse; et
la collecte des produits de pyrolyse de la formation souterraine;
**caractérisé en ce que** la formation souterraine est choisie pour comprendre du kérogène avec un pouvoir réflecteur de la vitrinite de 0,2 à 3,0%.

2. Procédé suivant la revendication 1, dans lequel la formation contenant du kérogène est une formation contenant du charbon.

3. Procédé suivant l'une ou l'autre des revendications 1 et 2, dans lequel la pression est d'une façon appropriée contrôlée dans une plage de 1,4-36, avantageusement de 2-20 bars absolus.

4. Procédé suivant l'une quelconque des revendications 1 à 3, dans lequel la température de pyrolyse va de 270-400°C, avantageusement de 275-375°C.

5. Procédé suivant l'une quelconque des revendications 1 à 4, dans lequel la formation contenant du kérogène est chauffée par une ou plusieurs sources de chaleur et les produits de pyrolyse sont collectés via un ou plusieurs puits de production.

6. Procédé suivant la revendication 5, dans lequel le nombre de sources de chaleur va de 1 à 16, avantageusement de 8 à 16, par puits de production.

7. Procédé suivant l'une quelconque des revendications 1 à 6, dans lequel le kérogène a un pouvoir réflecteur de la vitrinite de 0,25 à 2,0%, avantageusement de 0,4 à 1,2%.

8. Procédé suivant l'une quelconque des revendications 1 à 7, dans lequel le kérogène a une teneur en hydrogène supérieure à 2% en poids, avantageusement supérieure à 3% en poids.

9. Procédé suivant l'une quelconque des revendications 1 à 8, dans lequel le kérogène comprend un rapport hydrogène élémentaire à carbone allant de 0,5 à 2, avantageusement de 0,70 à 1,65.

10. Procédé suivant l'une quelconque des revendications 1 à 9, dans lequel le kérogène a un pourcentage en poids d'oxygène élémentaire de moins de 20% en poids, avantageusement de moins de 15% en poids.

11. Procédé suivant l'une quelconque des revendications 1 à 10, dans lequel le kérogène a un rapport oxygène élémentaire à carbone de 0,03 à 0,12.

12. Procédé suivant l'une quelconque des revendications 1 à 11, dans lequel après que les produits de pyrolyse ont été collectés, on laisse la formation contenant du kérogène réagir avec un fluide générateur de gaz de synthèse.
